(19) Europäisches Patentamt
European Patent Office
Office européen des brevets

(11) Veröffentlichungsnummer: **0 444 288 A1**

# (12) EUROPÄISCHE PATENTANMELDUNG

(21) Anmeldenummer: **90124686.8**

(51) Int. Cl.[5]: **C08G 69/34**

(22) Anmeldetag: **19.12.90**

(30) Priorität: **28.02.90 DE 4006245**

(43) Veröffentlichungstag der Anmeldung:
**04.09.91 Patentblatt 91/36**

(84) Benannte Vertragsstaaten:
**DE FR GB IT**

(71) Anmelder: **BAYER AG**
**W-5090 Leverkusen 1 Bayerwerk(DE)**

(72) Erfinder: **Köhler, Burkhard, Dr.**
**Mündelheimerstrasse 94**
**W-4150 Krefeld 11(DE)**
Erfinder: **Heinz, Hans-Detlef, Dr.**
**Breslauerstrasse 31**
**W-4150 Krefeld(DE)**
Erfinder: **Schrage, Heinrich, Dr.**
**Doerperhofstrasse 31**
**W-4150 Krefeld(DE)**

## (54) Weiche Polyamide und ihre Verwendung.

(57) Die Erfindung betrifft amorphe, weiche Polyamide mit Elastomercharakter und mit einer Glastemperatur von weniger als + 10° C auf Basis von Dimerfettsäuren und speziellen disekundären Diaminen, die Herstellung wie auch die Verwendung dieser elastomeren Polyamide als Kautschuk, Weichmacher bzw. insbesondere Schlagzähmodifikatoren für Thermoplaste oder als Weichsegmente zum Aufbau thermoplastischer Elastomerer und Additive für andere Zwecke.

EP 0 444 288 A1

Die Erfindung betrifft amorphe, weiche Polyamide mit Elastomercharakter und mit einer Glastemperatur von weniger als + 10° C auf Basis von Dimerfettsäuren und speziellen disekundären Diaminen, die Herstellung wie auch die Verwendung dieser elastomeren Polyamide als Kautschuk, Weichmacher bzw. insbesondere Schlagzähmodifikatoren für Thermoplaste oder als Weichsegmente zum Aufbau thermoplastischer Elastomerer und Additive für andere Zwecke.

Weichsegmente zum Aufbau von thermoplastischen Elastomeren sind bekannt, z.B. Polyether und aliphatische Polyester. Polyether weisen z.B. häufig nur eine schlechte Witterungsbeständigkeit auf, während Polyester hydrolyseanfällig sind. Weiterhin bringt die Tatsache, daß beide i.a. mit Hydroxylgruppen terminiert sind, häufig eine nur geringe Reaktivität der Endgruppen oder - z.B. bei Polyurethanen - eine relativ niedrige thermische Stabilität der Verknüpfungsgruppe mit sich.

Es wäre daher wünschenswert, Elastomere bzw. Weichsegmente auf Basis von Polyamiden einsetzen zu können, da die Amidgruppe von deutlich höherer Hydrolysestabilität ist als die Estergruppe, weil die Synthese von Polyamiden bezüglich der Endgruppen viele Freiheitsgrade läßt und weil die gebildeten N-Alkyl-polyamide bzw. die sekundären Aminoendgruppen weniger reaktiv sind.

Ferner weisen Polyether- und Polyesterweichsegmente eine relativ geringe Temperaturbeständigkeit auf, so daß sie für die Elastifizierung von Hochleistungsthermoplasten nicht in Frage kommen. Daher sind temperaturbeständige und weniger reaktive Polyamidweichsegmente von besonderem Interesse.

Überraschend wurde nun gefunden, daß Polyamide auf Basis dimerer Fettsäuren und spezieller cyclischer bisekundärer Diamine amorph sind, Glasübergangstemperaturen von weniger als + 10° C besitzen, wobei gut verfügbare Bausteine eingesetzt werden können und sich gut als Elastifikatoren/Schlagzähmodifikatoren für Thermoplaste eignen.

Gegenstand der Erfindung sind daher amorphe, weiche Polyamide mit einer Glasübergangstemperatur Tg unterhalb von + 10° C, vorzugsweise unterhalb von 0° C, und elastomerem Verhalten, bestehend aus Einheiten, abgeleitet von

1) Dimerfettsäuren (Polymere Fettsäuren), welche mindestens 80 Gew.-%, vorzugsweise mindestens 90 Gew.-%, dimere Fettsäureanteile enthalten,

2) bissekundären Diaminen der Formel (I)

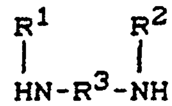

wobei

| | |
|---|---|
| $R^1$ und $R^2$ | gleich oder verschieden sein können und für $C_{1-22}$-Alkyl- oder Alkenylreste, vorzugsweise $C_2$-$C_4$-Alkylreste, insbesondere Butylreste stehen und |
| $R^3$ | ein $C_{2-44}$-Alkylenrest, vorzugsweise ein $C_{3-6}$-Alkylenrest ist, insbesondere ein $C_4$-Alkylenrest, der vorzugsweise gesättigt ist aber gegebenenfalls auch Doppelbindungen aufweisen kann, |

sowie gegebenenfalls

3) 0 bis 60 Gew.-%, vorzugsweise 0 bis 50 Gew.-%, weiteren bekannten polyamidbildenden Bausteinen, vorzugsweise Caprolactam, Adipinsäure, Hexamethylendiamin, Piperazin, 1-Aminoethyl-piperazin, Laurinlactam, Aminoundecansäure, Azelainsäure, Sebazinsäure und Korksäure,

wobei Dicarbonsäuren gemäß 1) und gegebenenfalls 3) sowie Diamine gemäß 2) und gegebenenfalls 3) im Molverhältnis von 1 : 0,8 bis 0,8 : 1, bevorzugt 1 : 0,9 bis 0,9 : 1 eingesetzt werden.

Weiterer Erfindungsgegenstand ist ein Herstellungsverfahren aus den genannten Komponenten nach an sich üblichen Polykondensationsverfahren.

Als disekundäre Diamine können eingesetzt werden: N,N'-Dibutyl-hexamethylendiamin, N,N'-Dimethyl-hexamethylendiamin, N,N'-Dihexyl-hexamethylendiamin, 1,12-Dibutyl-aminododecan, 1,10-Dibutylamino-decan, N,N'-Didodecyl-hexamethylendiamin, N,N'-Dibutyl-butylendiamin, N,N'-Dibutylethylendiamin, N,N'-Diisobutyl-butylendiamin.

Die disekundären Diamine sind bekannt, z.B. N,N'-Dibutyl-1,4-butylendiamin (Chemical Abstracts, Registry number 19435-69-9) oder N,N'-Dibutyl-hexamethylendiamin (Chemical Abstracts, Registry number 4835-11-4).

Bevorzugt sind:

N,N'-Di-n-butyl-butylendiamin, N,N'-Di-n-butyl-hexamethylendiamin.

Dimerfettsäuren sind bekannte Stoffe und kommerziell erhältlich (z.B. von Firma Unichema oder Firma Henkel). Bevorzugt sind diejenigen Dimerfettsäuren, wie sie u.a. von der Fa. Unichema unter dem Handelsnamen Pripol® vertrieben werden. Die Dimerfettsäuren können auch Anteile bis 5, vorzugsweise bis 3 Gew.-% an höher polymerisierten Derivaten (trimere Fettsäuren), gegebenenfalls geringe Anteile an monomeren Fettsäuren oder ungesättigten Komponenten, wie sie in technischen Produkten oftmals vorliegen, enthalten.

Die Komponenten 1) und 3) können teilweise auch Doppelbindungen enthalten.

Die Mitverwendung üblicher Kettenabbrecher bei der Polyamidherstellung, z.B. monofunktioneller Carbonsäuren oder Amine, z.B. Essigsäure, Hexansäure, Benzoesäure, Cyclohexancarbonsäure, Stearinsäure, Hexylamin bzw. Cyclohexylamin ist in üblichen Mengen möglich.

Auch Anhydride wie z.B. Maleinsäureanhydrid oder Tetrahydrophthalsäureanhydrid, sind als Comonomere geeignet.

Die Herstellung der erfindungsgemäßen Polyamide erfolgt nach den allgemein üblichen Verfahren.

Es können die für die Polyamidbildung üblichen Katalysatoren Verwendung finden.

Die erfindungsgemäßen PA-Elastomeren sind amorph. Im Rahmen dieser Erfindung wird darunter verstanden, daß die Schmelzwärme am Schmelzpunkt, bestimmt durch Thermoanalyse (DSC) mit z.B. einer Aufheizrate von 20K/s (2. Aufheizen) maximal 2 J/g, bevorzugt nicht unter mehr als 1 Jg und besonders bevorzugt nicht mehr als 0,5 J/g betragen soll.

Sie weisen weiterhin Glastemperaturen, bestimmt z.B. durch DSC, von weniger als 10° C, bevorzugt weniger als 0° C und insbesondere weniger als -15° C auf.

Vorzugsweise besitzen die erfindungsgemäßen Polyamide reaktive Endgruppen, seien es überwiegend Carboxyl- oder überwiegend (sekundäre) Amino-Endgruppen, je nach Überschuß der Dicarbonsäure- oder (sekundäre) Diamin-Komponenten bei ihrer Herstellung. Die erfindungsgemäßen Polyamide sind sehr thermostabil (unter Stickstoff z.B. bis 370° C s. Beispiele).

Die erfindungsgemäßen Polyamide können somit als Weichsegment für Polykondensate wie z.B. Polyamide oder Polyester und/oder Polyadditionsprodukte wie z.B. Polyurethane Verwendung finden. Sie können insbesondere auch als Schlagzähmodifikatoren bzw. Weichmacher für Thermoplaste und Duromere verwendet werden. Weiterhin können die erfindungsgemäßen Polyamide als Elastomersegment, als Härter für Duromere, z.B. auf Epoxidbasis oder auch (nach Vernetzung) als Kautschuke Verwendung finden. Sie sind ferner als Additive für Thermoplaste, Duroplaste und Fasern geeignet.

Beispiele

Beispiel 1

57 g Dimerfettsäure (Säurezahl 194,5) (Pripol® 1010), 20 g N,N'-Dibutyl-1,4-butylendiamin und 0,1 g Triphenylphosphit werden unter Stickstoff 1 h auf 180° C und 5 h auf 270° C erhitzt. Glasübergangstemperatur (DSC) Tg = -36° C.

Beispiel 2

57 g Dimerfettsäure (Säurezahl 194,5) 22,8 g N,N'-Dibutyl-hexamethylendiamin und 0,1 g Triphenylphosphit werden unter Stickstoff 1 h auf 80° C und 5 h auf 270° C erhitzt. Glasübergangstemperatur (DSC) Tg = -48° C.

Das Minimum der ersten Ableitung der Thermogravimetriemessung (Temperatur der maximalen Zersetzung) liegt bei beiden Polyamiden bei 450° C. Die Polyamide sind unter Stickstoff bis 370° C stabil.

**Patentansprüche**

**1.** Amorphe Polyamide mit einer Glasübergangstemperatur Tg unterhalb von + 10° C und elastomerem Verhalten, enthaltend Amid-Einheiten, abgeleitet von

1) Dimerfettsäuren, welche mindestens 80 Gew.-% dimere Fettsäuren enthalten,

2) bissekundären Diaminen der Formel (I)

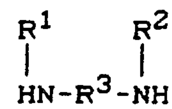

wobei

$R^1$ und $R^2$

gleich oder verschieden sein können und für $C_{1-22}$-Alkyl- oder Alkenylreste und

$R^3$

ein $C_{2-44}$-Alkylenrest ist, der gesättigt oder ungesättigt ist,

sowie

3) 0 bis 60 Gew.-% weiteren bekannten polyamidbildenden Bausteinen, vorzugsweise Caprolactam, Adipinsäure, Hexamethylendiamin, Piperazin, 1-Aminoethyl-piperazin, Laurinlactam, Aminoundecansäure, Azelaincäure, Sebazinsäure und Korksäure, wobei Dicarbonsäuren gemäß 1) und gegebenenfalls 3) sowie Diamine gemäß 2) und gegebenenfalls 3) im Molverhältnis von 1 : 0,8 bis 0,8 : 1 eingesetzt werden.

**2.** Amorphe Polyamide nach Anspruch 1, dadurch gekennzeichnet, daß im bissekundären Diamin I

$R^1$ und $R^2$

für $C_2$-$C_4$-Alkyl- oder Alkenylreste stehen und

$R^3$

ein $C_3$-$C_6$-Alkylenrest ist.

**3.** Amorphe Polyamide nach Ansprüchen 1 und 2, dadurch gekennzeichnet, daß das bissekundäre Diamin I ein N,N'-Di-n-butyl-tetramethylendiamin oder N,N'-Di-n-butyl-hexamethylendiamin ist.

**4.** Verfahren zur Herstellung der amorphen Polyamide nach Ansprüchen 1 bis 4, dadurch gekennzeichnet, daß die Komponenten 1 bis 3 mit 0,01 bis 1 Gew.-% eines Katalystors, vorzugsweise eines Di- oder Triesters der phosphorigen Säure, 1 bis 24 h auf Temperaturen bis zu 300° C erhitzt werden, wobei das Reaktionswasser abdestilliert.

**5.** Verwendung der amorphen Polyamide nach Ansprüchen 1 bis 4 als Weichsegmente für Thermoplaste bzw. für thermoplastische Elastomere, als Schlagzähmodifikatoren für Thermoplaste und Duromere, als Weichmacher, als (gegebenenfalls nach Vernetzung) Kautschuk sowie als sonstiges Additiv für Thermoplaste, Duromere oder Fasern.

**6.** Abmischungen und/oder Reaktionsprodukte, hergestellt aus und/oder enthaltend amorphe Polyamide nach Ansprüchen 1 bis 4.

Europäisches Patentamt

# EUROPÄISCHER RECHERCHENBERICHT

Nummer der Anmeldung

**EP 90 12 4686**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 217 145 (HENKEL) | | C 08 G 69/34 |
| | – – – | | |
| A | EP-A-0 027 944 (SCHERING) | | |
| | – – – – – | | |
| | | | RECHERCHIERTE SACHGEBIETE (Int. Cl.5) |
| | | | C 08 G |

Der vorliegende Recherchenbericht wurde für alle Patentansprüche erstellt

| Recherchenort | Abschlußdatum der Recherche | Prüfer |
|---|---|---|
| Den Haag | 03 Juni 91 | LEROY ALAIN |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument